# EUROPEAN PATENT APPLICATION

(11) **EP 2 590 469 A1**
(43) Date of publication of application: **08.05.2013**
(21) Application number: 11360048.0
(22) Date of filing: 03.11.2011
(51) Int. Cl.: H04W 76/06

(54) **Common channel control**

(71) Applicant: Alcatel Lucent, 75007 Paris (FR)
(72) Inventor: Hou, Jindong, Swindon SN5 7BY (GB); Pham, Huy Thang, Dollard-des-Ormeaux Quebec H9A 3J2 (CA)
(74) Representative: Script IP Limited

(57) **Abstract**

A method of controlling release of an acquired common channel by user equipment in a wireless telecommunications network and a computer program product and user equipment operable to perform that method. The method comprises: acquiring a common channel; assessing whether data traffic to be sent between the user equipment and the network meets predetermined Cell_DCH upgrade criteria; and retaining the common channel if the predetermined Cell_DCH upgrade criteria are met until the user equipment transitions to a Cell_DCH state.

Such a method allows user equipment to retain an acquired common E-DCH resource for a reasonable period and may reduce upsizing delay towards a Cell_DCH state. Embodiments can allow a cell-load aware trade-off between efficient resource usage and end user service.

## Description

### FIELD OF THE INVENTION

The present invention relates to a method of controlling release of an acquired common channel by user equipment in a wireless telecommunications network, user equipment operable to carry out that method, and a computer program product operable to carry out that method.

### BACKGROUND

Wireless telecommunications systems are known. In a cellular system, radio coverage is provided to user equipment, for example, mobile telephones, in areas known as cells. A base station is located in each cell to provide radio coverage. User equipment in each cell receives information and data from the base station and transmits information and data to the base station.

Information and data transmitted by the base station to the user equipment occurs on channels of radio carriers known as downlink carriers. Information and data transmitted by user equipment to the base station occurs on uplink data channels of radio carriers known as uplink carriers.

The widespread popularity of smartphones has caused a significant change to data traffic profiles carried in known telecommunications networks. The data traffic profile of user equipment is becoming increasingly discontinuous or "bursty" and traditional transmission mode methods, designed primarily for continuous data transmission, may not aid overall efficient network operation or may be unsuitable for such a change to a typical data traffic profile.

In particular, transitioning between continuous data transmission and bursty data transmission may cause issues and inefficiencies within a wireless telecommunication network. Accordingly, it is desired to provide improved methods of operation for user equipment and base stations in a wireless telecommunications network.

### SUMMARY

A first aspect provides a method of controlling release of an acquired common channel by user equipment in a wireless telecommunications network, comprising: acquiring a common channel; assessing whether data traffic to be sent between the user equipment and the network meets predetermined Cell_DCH upgrade criteria; and retaining the common channel if the predetermined Cell_DCH upgrade criteria are met until the user equipment transitions to a Cell_DCH state.

Common E-DCH transmission for user equipment operating in a Cell_FACH state may offer an opportunity to reduce latency in the case where user equipment is required to transition between a Cell_FACH and a Cell_DCH state. That is to say, if at the time of upgrading a Cell_DCH state the user equipment has been occupying a common e-DCH resource, it may be possible to re-use a prior synchronisation AA procedure. Re-use of a previous synchronisation procedure may allow user equipment to avoid a timeconsuming sync A procedure, thereby potentially avoiding the need to incur a synchronisation delay.

Nonetheless, according to current modes of operation, a user equipment operating to make transmissions whilst in a Cell_FACH state (on e-FACH capable user equipment) may be unable to utilise such a potentially delay-saving procedure. For example, if user equipment is making a common control channel transmission (CCCH) and determines that it has no further traffic, that user equipment is operable to release the common E-DCH resource, irrespective of the setting of an internal timer known as the maximum E-DCH resource allocation for CCCH timer. Furthermore, if user equipment is making a dedicated control channel or dedicated traffic channel transmission (DCCH or DTCH) and receives a reconfiguration message instructing a change in RRC state, and before that user equipment completes internal actions for the transition to a more dedicated RRC state an e-DCH transmission continuation back-off timer expires, the user equipment is operable to release a common E-DCH resource. In both such cases, by the time the user equipment is operable to transition to a more dedicated RRC state the user equipment has been operable to release a shared channel (common E-DCH) and, thus, lost synchronisation with the network. As a result, it will be required to perform a sync A procedure in order to transition to a more dedicated RRC state.

Whilst it can be seen that releasing a common E-DCH resource may result in an unnecessary delay for a user equipment attempting to transition to a more dedicated RRC state, since the pool of common E-DCH resources is shared by all user equipment operating in a cell, or at least those operable to perform E-FACH transmissions, if a user equipment retains a common resource for too long whilst not making any transmissions, overall network resources are being wasted. It will therefore be appreciated that in order to offer efficient operation of the network as a whole, a trade-off between efficient common E-DCH resource usage and fast service response offering less delay for a state transmission may be chosen to optimise overall system performance.

The first aspect recognises that user equipment may be operable to determine that it is likely to require full RRC Cell_DCH state whilst it has acquired a common channel and, thus determine that it will not release that common channel until the upgrade to a more connected RRC state has been completed.

If an assessment is made by the user equipment that it is likely that it will be upgraded to operate in a Cell_DCH RRC state, the user equipment is operable to retain the already acquired common channel until the upgrade to a Cell_DCH RRC state has been completed. If the assessment made by the user equipment is that the user equipment is unlikely to be upgraded to operate in a higher RRC state the user equipment is operable to immediately release the common channel once it has made a data traffic transmission.

The first aspect recognises that user equipment need not release the obtained common resource until internal or external procedures moving the user equipment towards a Cell_DCH state are complete. In such a manner, synchronisation obtained between user equipment and a network on the common channel (for example, a common E-DCH channel) is not lost and the user equipment may move straight to a Cell_DCH state without needing to complete a further synchronisation procedure.

In one embodiment, wherein assessing whether data traffic to be sent between the user equipment and the network comprises assessing the nature of data traffic to be sent from the user equipment to the network and determining whether the nature of that data traffic meets the predetermined Cell_DCH upgrade criteria.

Accordingly, the initiation or arrival of a circuit switched voice call or the generation of a large amount of user packet switched data may trigger the user equipment to send an RRC connection request or cell update message. That RRC connection request or cell update message includes information which will enable the network to allocate the user equipment the most appropriate network resource. In this particular case, the indication sent by user equipment to the network is likely to include an indication that there is a mobile originated conversational call or an uplink data transmission with a traffic volume indicator set to 1. That is to say, the data or traffic which the user equipment wishes to send cannot be successfully sent using non-Cell_DCH methods. Thus by having a set of predetermined criteria relating to the nature of data traffic originating at the user equipment, it is possible for the user equipment to make an assessment of whether a transition to a cell_DCH state is likely before the network instructs a change to the RRC state in which the user equipment is currently operating.

In one embodiment, the method comprises: acquiring a common channel on which to make a common control channel transmission; and retaining the common channel after making the common control channel transmission if the predetermined Cell_DCH upgrade criteria are met until the user equipment transitions to a Cell_DCH state.

Accordingly, rather than immediately release a CCCH channel once a control channel transmission has been made, the user equipment may retain that channel until a transition to a cell_DCH state has occurred.

In one embodiment, the method comprises: acquiring a common control channel on which to make a dedicated control channel transmission; and retaining the common channel after making the dedicated control channel transmission if the predetermined Cell_DCH upgrade criteria are met until the user equipment transitions to a Cell_DCH state.

In one embodiment, the method comprises: acquiring a common E-DCH; and retaining the common E-DCH if the predetermined Cell_DCH upgrade criteria are met until the user equipment transitions to a Cell_DCH state.

Accordingly, various common channels and transmissions may be controlled in accordance with the principles of the first aspect.

In one embodiment, the step of retaining comprises: determining whether a predetermined common channel retention timer has expired and, if so, releasing the acquired common channel.

It will be appreciated that after user equipment transmits an indication that a Cell_DCH state may be required, it may take a while for the network, including an RNC, node B and user plane, to be reconfigured. In particular, it may take a period of time before an RNC may be operable to send a cell update confirm or radio bearer reconfiguration message back down through the network, via a base station, to user equipment. In such a situation a method employed at user equipment which simply retains a common channel until a transition to Cell_DCH occurs at the user equipment may result in user equipment retaining a common channel for a significant period of time, thereby detrimentally affecting overall operation of a network. That is to say, the user equipment may retain a common channel resource for too long and that may impact upon other users competing for common channels in the network.

Equipping user equipment with a supervision timer set to achieve a fair trade-off between potential faster transition benefits and more efficient common or shared channel usage may alleviate that impact.

Accordingly, such a method provides that whilst a channel retention timer is running, even if there is no immediate traffic, the user equipment may be operable to retain a common channel for a minimum time. In the case that, for example, a cell update confirm message is returned by the network before the timer runs out, the user equipment is operable to avoid needing to perform a sync A procedure and, thus, the transition to a Cell_DCH state may occur more quickly. If, however, a cell update confirm message is not returned to user equipment before the timer expires, unnecessary retention of a common channel by user equipment can be minimised and the common channel released on expiry of the common channel retention timer.

In one embodiment, the predetermined common channel retention timer is initiated on acquiring the common channel.

In one embodiment, the method comprises: determining whether common channel usage in the wireless telecommunications network meets predetermined usage criteria and, if the criteria are met, disabling the retaining of the common channel.

It will be appreciated that in order to achieve a dynamically optimal trade-off between efficient resource usage and service delay performance it is possible to employ methods of the first aspect in accordance with actual common channel resource usage. That is to say, if a network is experiencing light common channel usage, it may not matter whether a common channel is occupied by user equipment for longer than required. That is to say, a gain in transition between radio resource states does not disadvantage user equipment fighting for common resource channels. In such a case, the methods of the first aspect may be fully enabled. If a cell or a network is experiencing heavy common channel usage, it may be disadvantageous to sacrifice an already stressed set of common resource channels to try and gain better transition latency. In such a situation, methods such as those of the first aspect may be disabled at user equipment in favour of achieving a more efficient common resource usage within a cell.

In one embodiment, the determining comprises: assessing whether a time period which elapses between requesting and being allocated a common channel meets predetermined criteria indicative of common channel restrictions in a cell.

The user equipment may itself autonomously make an assessment or determination of likely cell load conditions. The user equipment may, for example, be aware of cell load conditions implicitly by making an assessment of E-RACH (ie enhanced RACH) procedure delays. If a user equipment's E-RACH attempt is successfully accepted by a network within a preconfigured threshold number of repetitions, it is likely to imply light network loading and, thus, the user equipment may autonomously enable common channel enhancement methods. Alternatively, if a user equipment's random access channel request is not accepted, even after retrying more than a preconfigured and predetermined threshold number of repetitions, it is likely that the cell is experiencing heavy common channel usage and, thus, that the waiting time for obtaining a common channel resource is long. As a result, user equipment may be operable to automatically disable common channel enhancement methods described previously.

In one embodiment, the determining comprises: receiving an indication of common channel restrictions originating from a control node in the network. In one embodiment, the determining comprises: receiving an indication of common channel restrictions originating from a base station in the network.

On the network side, an RNC may be operable to assess a loading of a particular cell. In general, an RNC will be aware of the number of users in a cell operating in Cell_FACH. As a result, a threshold may be implemented such that activation or de-activation of user equipment common channel enhancement methods may be made to operate. Similarly, a base station or node B is also typically aware of the loading within a particular cell. It may, for example, be aware of how many enhanced RACH requests are received and/or accepted and/or rejected within a given observation period. As a result, a threshold may be implemented at a base station to activate or de-activate common channel enhancement methods to be performed at the user equipment.

In one embodiment, the indication comprises reception of a HS-SCCH order. In one embodiment, determining comprises reception of a change in a System Information Broadcast message. Other similar indications may be utilised.

A second aspect provides a computer program product operable, when executed on a computer, to perform the method of the first aspect.

A third aspect provides user equipment operable to control release of an acquired common channel in a wireless telecommunications network, the user equipment comprising:
acquisition logic operable to acquire a common channel;
data traffic assessment logic operable to assess whether data traffic to be sent between the user equipment and the network meets predetermined Cell_DCH upgrade criteria; and
common channel retention logic operable to retain the common channel if the predetermined Cell_DCH upgrade criteria are met until the user equipment transitions to a Cell_DCH state.

In one embodiment, the data assessment logic is operable to assess whether data traffic to be sent between the user equipment and the network comprises assessing the nature of data traffic to be sent from the user equipment to the network and determining whether the nature of that data traffic meets the predetermined Cell_DCH upgrade criteria.

In one embodiment, the data traffic assessment logic is operable to acquire a common channel on which to make a common control channel transmission; and the common channel retention logic is operable to retain the common channel after making the common control channel transmission if the predetermined Cell_DCH upgrade criteria are met until the user equipment transitions to a Cell_DCH state.

In one embodiment, the data traffic assessment logic is operable to acquire a common control channel on which to make a dedicated control channel transmission; and the common channel retention logic is operable to retain the common channel after making the dedicated control channel transmission if the predetermined Cell_DCH upgrade criteria are met until the user equipment transitions to a Cell_DCH state.

In one embodiment, the acquisition logic is operable to acquire an E-DCH; and retaining the E-DCH if the predetermined Cell_DCH upgrade criteria are met until the user equipment transitions to a Cell_DCH state.

In one embodiment, the common channel retention logic is operable to determine whether a predetermined common channel retention timer has expired and, if so, release the acquired common channel.

In one embodiment, the predetermined common channel retention timer is initiated on acquiring the common channel.

In one embodiment, the user equipment further comprises common channel usage determination logic operable to determine whether common channel usage in the wireless telecommunications network meets predetermined usage criteria and, if the criteria are met, disabling the retention of the common channel.

In one embodiment, the common channel usage determination logic is operable to assess whether a time period which elapses between requesting and being allocated a common channel meets predetermined criteria indicative of common channel restrictions in a cell.

In one embodiment, the common channel usage determination logic is operable to receive an indication of common channel restrictions originating from a control node in the network.

In one embodiment, the common channel usage determination logic is operable to receive an indication of common channel restrictions originating from a base station in the network.

In one embodiment, the indication comprises reception of a HS-SCCH order.

In one embodiment, the common channel usage determination logic is operable to receive a change in a System Information Broadcast message.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments will now be described further with reference to the accompanying drawings in which:
Figure 1 illustrates the main components of a telecommunications network according to one embodiment;
Figure 2 illustrates schematically by means of a flowchart a method of operation of a user equipment operable to perform a fast state transition according to one embodiment;
Figure 3 illustrates schematically by means of a flowchart a method of operation of a user equipment operable to perform a fast state transition according to one embodiment;
Figure 4 illustrates schematically a usage-aware enhancement activation scheme according to one embodiment.

### DESCRIPTION OF THE EMBODIMENTS

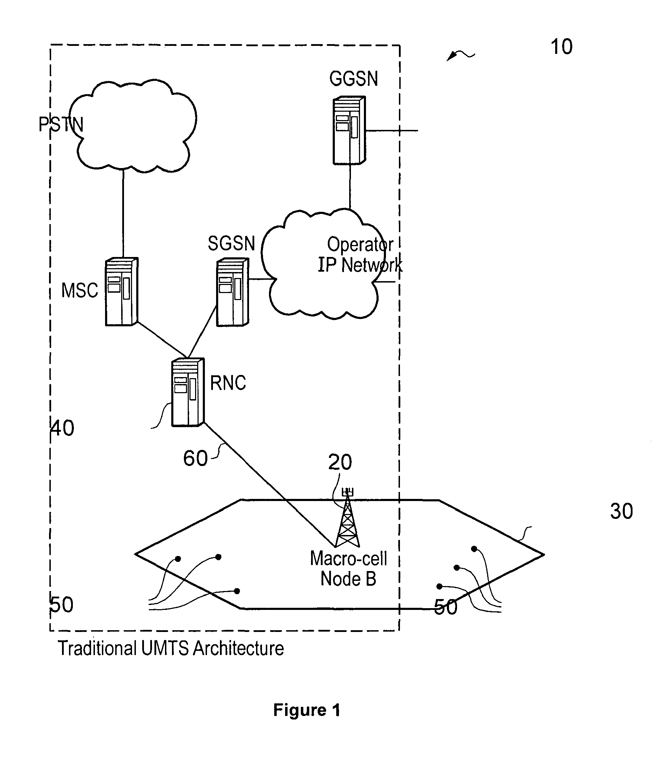

Figure 1 illustrates schematically the main components of a wireless telecommunications system 10 according to one embodiment. User equipment 50 roam through the wireless communications system. Base stations 20 are provided which support areas of radio coverage 30. A number of such base stations 20 are provided and are distributed geographically in order to provide a wide area of coverage to user equipment 50.

When user equipment is within an area served by a base station 30, communications may be established between the user equipment and the base station over associated radio links. Each base station typically supports a number of sectors within the geographical area of service 30.

Typically, a different antenna within a base station supports each associated sector. Each base station 20 has multiple antennas. It will be appreciated that Figure 1 illustrates a small sub-set of a total number of user equipment and base stations that may be present in a typical communications system.

The wireless communications system is managed by a radio network controller (RNC) 40. The RNC 40 controls operation of the wireless telecommunications system by communicating with a plurality of base stations over a backhaul communications link 60. The RNC also communicates with user equipment 50 via each base station 20 and thus effectively manages a region of the entire wireless communications network 10. User equipment communicates with base stations 20 by transmitting data and information on channels known as uplink or reverse channels, and a base station 20 communicates with user equipment 50 by transmitting data and information on radio channels known as downlink or forward channels.

User equipment may operate in various modes in, for example, a UMTS telecommunications network. On initial turning on of user equipment in the cell, it will typically operate in "idle mode". Once it synchronises and attaches itself to a base station, it gains radio resource control (RRC) connection and is referred to as being in connected mode. User equipment in idle mode does not have a radio resource control connection. If user equipment is RRC connected it can be in one of five different RRC states: Cell_DCH, Cell_FACH, enhanced Cell_FACH, Cell_PCH, or URA_PCH states.

User equipment typically moves into Cell_DCH state when its data traffic is high. In a Cell_DCH state, the user equipment is allocated a dedicated channel on which to transmit and receive data from a base station. In a network operating according to typical UMTS architecture, user equipment can be in a Cell_DCH. state when it is expected to have a high volume of traffic. Operation in a Cell_DCH state is typically highly demanding of battery power. User equipment may be operable, when not in a Cell_DCH state, to use a random access channel (RACH) on the uplink and a base station will operate to communicate with user equipment using a forward access channel (FACH). RACH and FACH have a small data carrying ability and in WCDMA or UMTS systems it is possible for user equipment and base stations to operate and communicate data traffic therebetween using shared or common resources on downlink and uplink when user equipment is operating in a Cell_FACH state.

In the uplink, such data traffic transmission occurs using an enhanced dedicated channel. In the downlink, it is sent on a high speed downlink shared channel. Such channels allow user equipment and base stations to communicate and to transmit longer and larger data packets between themselves for a time without the need for user equipment to upgrade to operating in a Cell_DCH RRC state. Such arrangements allow user equipment to remain in a Cell_FACH state for longer without transitioning to a more dedicated RRC state, thereby allowing a power consumption saving.

User equipment operating in a cell supported by a base station compete for common or shared channels. When operating in a Cell_FACH state, user equipment must compete with other user equipment in order to be allocated one of those shared channels.

It will be appreciated that for data traffic which is particularly bursty in nature, operation in a full Cell_DCH state can be particularly wasteful of battery at user equipment and also of available radio resource. Thus, the ability to handle bursty traffic without entering a more dedicated state can be beneficial to overall network operation.

The widespread popularity of "smartphones" in commercial networks has led to a change in typical data traffic profile carried within a network. The loading of Web pages and subsequent user reading, for example, has led to a data traffic profile which has become substantially discontinuous or bursty, and traditional communication link establishment techniques and transfer techniques designed primarily for continuous data transmission may not offer a particularly efficient or prompt means to handle bursty traffic. As a result, user experience and network response may experience undue delay. In particular, in a UMTS radio network, utilisation of legacy common channel acquisition techniques designed for continuous data transmission may lead to unwanted service delays.

Common e-DCH transmission for user equipment operating in a Cell_FACH state may offer an opportunity to reduce latency in the case where user equipment is required to transition between a Cell_FACH and a Cell_DCH state. That is to say, if at the time of upgrading a Cell_DCH state the user equipment has been occupying a common e-DCH resource, it may be possible to re-use a prior synchronisation AA procedure. Re-use of a previous synchronisation procedure may allow user equipment to avoid a timeconsuming sync A procedure, thereby potentially avoiding the need to incur a 160 millisecond delay.

Nonetheless, according to current modes of operation, a user equipment operating to make transmissions whilst in a Cell_FACH state (on e-FACH capable user equipment) may be unable to utilise such a potentially delay-saving procedure. For example, if user equipment is making a common control channel transmission (CCCH) and determines that it has no further traffic, that user equipment is operable to release the common e-DCH resource, irrespective of the setting of an internal timer known as the maximum e-DCH resource allocation for CCCH timer. Furthermore, if user equipment is making a dedicated control channel or dedicated traffic channel transmission (DCCH or DTCH) and receives a reconfiguration message instructing a change in RRC state, and before that user equipment completes internal actions for the transition to a more dedicated RRC state an e-DCH transmission continuation back-off timer expires, the user equipment is operable to release a common e-DCH resource. In both such cases, by the time the user equipment is operable to transition to a more dedicated RRC state the user equipment has been operable to release a shared channel (common e-DCH) and, thus, lost synchronisation with the network. As a result, it will be required to perform a sync A procedure in order to transition to a more dedicated RRC state.

Whilst it can be seen that releasing a common e-DCH resource may result in an unnecessary delay for a user equipment attempting to transition to a more dedicated RRC state, since the pool of common e-DCH resources is shared by all user equipment operating in a cell, or at least those operable to perform e-FACH transmissions, if a user equipment retains a common resource for too long whilst not making any transmissions, overall network resources are being wasted. It will therefore be appreciated that in order to offer efficient operation of the network as a whole, a trade-off between efficient common e-DCH resource usage and fast service response offering less delay for a state transmission may be chosen to optimise overall system performance.

Embodiments described aim to retain an acquired common e-DCH resource for a reasonable period to allow reduction in user equipment delay if upgrading to a more dedicated RRC state towards a Cell_DCH state. Embodiments may offer a cell load-aware trade-off between efficient resource usage and reduced delays in end user experience.

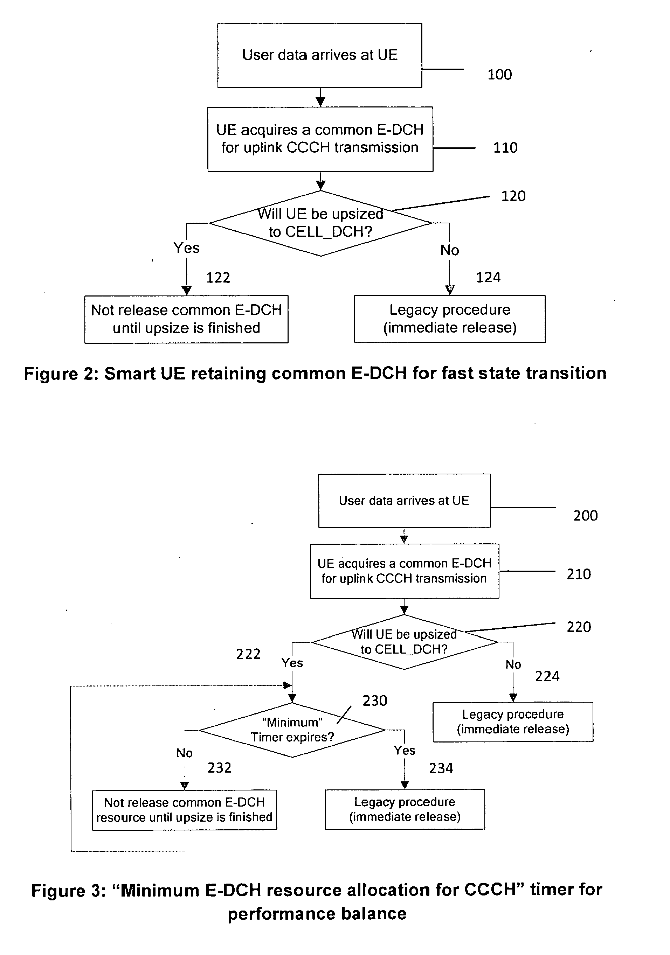

Figure 2 illustrates schematically a method which may be implemented at user equipment. According to the method shown in Figure 2, the user equipment may be operable to determine that it is likely to require full RRC Cell_DCH state whilst it has acquired a common channel and, thus, determines that it will not release that common channel until the upgrade to a more connected RRC state has been completed.

As shown in Figure 2, user equipment 50 is operable to determine that data has arrived within its internal architecture at step 100. At step 110 the user equipment is operable to acquire a common or shared channel on which to perform an uplink CCCH transmission (that is to say, a logical channel). At step 120 the user equipment is operable to make an assessment as to whether it is likely to be upgraded to operate in a Cell_DCH RRC state. If the assessment is made by the user equipment that it is likely that it will be upgraded to operate in a Cell_DCH RRC state, the user equipment 50 is operable to retain the already acquired common channel until the upgrade to a Cell_DCH RRC state has been completed 122. If the assessment made by the user equipment is that the user equipment is unlikely to be upgraded to operate in a higher RRC state 124, the user equipment is operable to immediately release the common e-DCH channel once it has made its uplink CCCH transmission.

In one particular example, a user equipment 50 may operate initially in idle mode, URA_PCH state or R99 Cell_PCH state, or Cell_FACH. The initiation or arrival of a circuit switched voice call or the generation of a large amount of user packet switched data triggers the user equipment to send an RRC connection request or cell update message. That RRC connection request or cell update message includes information which will enable the network to allocate the user equipment the most appropriate network resource. In this particular case, the indication sent by user equipment to the network is likely to include an indication that there is a mobile originated conversational call or an uplink data transmission with a traffic volume indicator set to 1. That is to say, the data or traffic which the user equipment wishes to send cannot be successfully sent using non-Cell_DCH methods.

The user equipment is then operable to acquire a common channel; for example, a common e-DCH resource on which to send an RRC connection request or cell update request on a common control channel. In this example, since at the assessment step 120 the user equipment is operable to determine that it is likely it will be upsized to a Cell_DCH state, it does not release the obtained common E-DCH resource until internal or external procedures moving the user equipment towards a Cell_DCH are complete. In such a manner, synchronisation obtained between user equipment and a network on the common channel (common e-DCH channel) is not lost and the user equipment may move straight to a Cell_DCH state without needing to complete a sync A procedure.

In another embodiment, user equipment may be equipped with an enhanced Cell_PCH feature. According to such a feature, user equipment may be operable to autonomously transit to Cell_FACH state and uplink data from that Cell_FACH state without the need to perform a cell update. If the user equipment detects the arrival of a big chunk of packet switched data; that is to say, an amount of packet switched data exceeding a predetermined threshold, the user equipment may be operable to deduce that the network is likely to transition its RRC state from a Cell_FACH state to a Cell_DCH state in the near future. Thus, at step 120 the user equipment 50 may be operable to determine that a transition to Cell_DCH is likely and, thus, not release a common E-DCH.

In the case that user equipment determines that a transition to a Cell_DCH state is unlikely at step 120; for example, in the instance that user equipment is simply performing a periodic cell update process, the user equipment is operable to follow a legacy procedure and immediately release common resource as soon as it has no further traffic to send to the network.

Figure 3 illustrates schematically a method performed at user equipment according to one embodiment.

It will be appreciated that after user equipment transmits a cell update message it may take a while for the network, including the RNC node B and user plane, to be reconfigured. In particular, it may take a period of time before an RNC may be operable to send a cell update confirm or radio bearer reconfiguration message back down through the network, via a base station, to user equipment. In such a situation a method according to Figure 2 employed at user equipment may result in user equipment retaining a common channel for a significant period of time, thereby detrimentally affecting overall operation of a network. That is to say, the user equipment may retain a common E-DCH resource for too long.

Figure 3 illustrates schematically a method which aims to overcome such issues. In the method illustrated schematically in Figure 3, user equipment 50 may be equipped with a supervision timer set to achieve- a fair trade-off between potential faster transition benefits and more efficient common or shared channel usage.

Accordingly, such a method provides that whilst the existing "minimum E-DCH resource allocation for CCCH" timer is running, even if there is no immediate traffic, the user equipment may be operable to retain a common E-DCH resource for that minimum time. In the case that a cell update confirm message is returned by the network before the timer runs out, the user equipment is operable to avoid needing to perform a sync A procedure and, thus, the transition to a Cell_DCH state may occur more quickly. If, however, a cell update confirm message is not returned to a user equipment before the timer expires, unnecessary retention of a common channel by user equipment can be minimised.

As is shown in Figure 3, at step 200 the user equipment determines that there is user data which is to be sent to the network, and at step 210 acquires a common channel; for example, a common E-DCH channel, on which to uplink a CCCH or control transmission. The user equipment 50 is operable at step 220 to make an assessment of whether the user equipment is likely to need to transit to a more dedicated RRC state, for example, a Cell-DCH state. If the assessment performed at step 220 results in a negative response at step 224 the user equipment simply reverts to known procedure and immediately releases the obtained common channel. If the assessment performed at step 220 results in a positive response, as at step 222, the user equipment 50 is further operable to make an assessment of whether a pre-set minimum timer has expired. That timer may be set by the network, by the user equipment itself, or may be pre-set. The assessment of whether the minimum timer expires is shown as step 230 in Figure 3. If the timer has expired, as shown at step 234 of Figure 3, the user equipment 50 is operable to immediately release the common channel. If, however, the assessment at step 230 is such that the minimum timer has not expired, as shown at step 232 in Figure 3, the user equipment 50 does not release the common channel until the likely upgrade to a Cell_DCH has occurred.

It will be appreciated that in order to achieve a dynamically optimal trade-off between efficient resource usage and service delay performance it is possible to employ methods such as those depicted schematically in Figures 2 and 3, in accordance with actual common channel resource usage. That is to say, if a network is experiencing light common channel usage, it may not matter whether a common channel is occupied by user equipment for longer than required. That is to say, a gain in transition between radio resource states does not disadvantage user equipment fighting for common resource channels. In such a case, the methods such as those shown in Figures 2 or 3 may be fully enabled. If a cell or a network is experiencing heavy common channel usage, it may be disadvantageous to sacrifice an already stressed set of common resource channels to try and gain better transition latency. In such a situation, methods such as those depicted schematically in Figures 2 and 3 may be disabled at user equipment in favour of achieving a more efficient common resource usage within the cell.

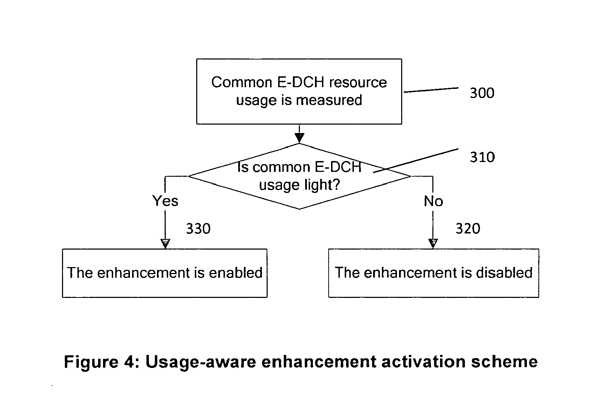

Figure 4 illustrates schematically a method of assessing whether methods such as those shown in Figures 2 and 3 are to be implemented. As shown in Figure 4, at step 300 an RNC, base station or user equipment may be operable to determine the extent to which common channels are being used within a cell of a network. At step 310, an assessment can be made, based on the measurement of step 300, as to whether common channel usage is likely to be light or heavy. If common channel usage is determined to be light, as at step 320, the autonomous methods employed by user equipment in order to retain common channels may be disabled. If, however, it is determined, as at step 330, that common channel usage within a cell is light, user equipment may be instructed to ensure that enhancements in relation to common channel usage and release may be enabled.

It will be appreciated that detection and assessment of cell node and resource usage may be performed in a number of ways. Furthermore, indication or determination of whether the user equipment may or may not be operable to implement methods such as those illustrated schematically in Figures 2 or 3 may also be implemented in various ways. By way of example, various embodiments are discussed below.

On the network side, an RNC may be operable to assess a loading of a particular cell. In general, an RNC will be aware of the number of users in a cell operating in Cell_FACH. As a result, a threshold may be implemented such that activation or de-activation of user equipment common channel enhancement methods may be made to operate. In order to activate or de-activate user equipment common channel handling enhancements, the RNC may be operable to dynamically modify a system information broadcast. Thus, the user equipment may be informed indirectly by system information broadcast information as to whether it is to activate or de-activate the common channel enhancement methods. It will be appreciated that such a method of activation or de-activation may require a new field within a system information broadcast which can be set to true or false. Activation or de-activation of the common channel enhancements may be implemented dependent upon that new field.

Similarly, a base station or node B is also typically aware of the loading within a particular cell. It may, for example, be aware of how many enhanced RACH requests are received and/or accepted and/or rejected within a given observation period. As a result, a threshold may be implemented at a base station to activate or de-activate common channel enhancement methods to be performed at the user equipment. Communication of activation or de-activation of common channel enhancements may be indicated to user equipment in a number of ways. For example, during an e-RACH stage a base station may indicate an on/off signal to user equipment via a special enhanced acquisition indication command. Alternatively, a base station may dynamically send a layer 1 order, such as an HS-SCCH order, to user equipment to activate or de-activate the enhancement.

The user equipment may itself autonomously make an assessment or determination of likely cell load conditions. The user equipment may, for example, be aware of cell load conditions implicitly by making an assessment of E-RACH procedure delays. If a user equipment's E-RACH attempt is successfully accepted by a network within a preconfigured threshold number of repetitions, it is likely to imply light network loading and, thus, the user equipment may autonomously enable common channel enhancement methods. Alternatively, if a user equipment's random access channel request is not accepted, even after retrying more than a preconfigured and predetermined threshold number of repetitions, it is likely that the cell is experiencing heavy common channel usage and, thus, that the waiting time for obtaining a common channel resource is long. As a result, user equipment may be operable to automatically disable common channel enhancement methods described previously.

It will be appreciated that any single or combination of the methods above may be implemented. For example, in a hybrid scheme, an RNC may detect heavy or light loading based on its own assessment, inform a base station and that base station may use a layer 1 message or order to command user equipment to enable or disable enhancement methods.

It will be appreciated that methods described herein may offer enhanced customer experience, offering less service launch delay.

Such methods may significantly improve latency if common channel resources are only released once a cell update or RRC connection set-up procedure is completed.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of controlling release of an acquired common channel by user equipment in a wireless telecommunications network, comprising:
acquiring a common channel;
assessing whether data traffic to be sent between said user equipment and said network meets predetermined Cell_DCH upgrade criteria; and
retaining said common channel if said predetermined Cell_DCH upgrade criteria are met until said user equipment transitions to a Cell_DCH state.

2. A method according to claim 1, wherein assessing whether data traffic to be sent between said user equipment and said network comprises assessing the nature of data traffic to be sent from said user equipment to said network and determining whether the nature of that data traffic meets said predetermined Cell_DCH upgrade criteria.

3. A method according to any preceding claim, comprising acquiring a common channel on which to make a common control channel transmission; and retaining said common channel after making said common control channel transmission if said predetermined Cell_DCH upgrade criteria are met until said user equipment transitions to a Cell_DCH state.

4. A method according to any preceding claim, comprising acquiring a common control channel on which to make a dedicated control channel transmission; and retaining said common channel after making said dedicated control channel transmission if said predetermined Cell_DCH upgrade criteria are met until said user equipment transitions to a Cell_DCH state.

5. A method according to any preceding claim, comprising acquiring a common E-DCH; and retaining said common E-DCH if said predetermined Cell_DCH upgrade criteria are met until said user equipment transitions to a Cell_DCH state.

6. A method according to any preceding claim, wherein said step of retaining comprises:
determining whether a predetermined common channel retention timer has expired and, if so, releasing said acquired common channel.

7. A method according to claim 6, wherein said predetermined common channel retention timer is initiated on acquiring said common channel.

8. A method according to any preceding claim, comprising:
determining whether common channel usage in said wireless telecommunications network meets predetermined usage criteria and, if said criteria are met, disabling said retaining of said common channel.

9. A method according to claim 8, wherein said determining comprises: assessing whether a time period which elapsed between requesting and being allocated a common channel meets predetermined criteria indicative of common channel restrictions in a cell.

10. A method according to claim 8, wherein said determining comprises receiving an indication of common channel restrictions originating from a control node in said network.

11. A method according to claim 8, wherein said determining comprises receiving an indication of common channel restrictions originating from a base station in said network.

12. A method according to claim 10 or claim 11, wherein said indication comprises reception of a HS-SCCH order.

13. A method according to claim 10 or claim 11, wherein said determining comprises reception of a change in a System Information Broadcast message.

14. A computer program product operable, when executed on a computer, to perform the method of any one of claims 1 to 13.

15. User equipment operable to control release of an acquired common channel in a wireless telecommunications network, said user equipment comprising:
acquisition logic operable to acquire a common channel;
data traffic assessment logic operable to assess whether data traffic to be sent between said user equipment and said network meets predetermined Cell_DCH upgrade criteria; and
common channel retention logic operable to retain said common channel if said predetermined Cell_DCH upgrade criteria are met until said user equipment transitions to a Cell_DCH state.

## Amended claims

### Amended claims in accordance with Rule 137(2) EPC.

**1.** A method of controlling release of an acquired common channel by user equipment (50) in a wireless telecommunications network (10), comprising:
acquiring (110:210) a common channel;
assessing (120:220), by user equipment, whether data traffic to be sent between said user equipment and said network meets predetermined Cell_DCH upgrade criteria; by assessing (120;220) assessing whether data traffic to be sent between said user equipment (50) and said network (10) comprises assessing the nature of data traffic to be sent from said user equipment (50) to said network (10) and determining whether the nature of that data traffic meets said predetermined Cell_DCH upgrade criteria:
and retaining (122; 132) said common channel if said predetermined Cell_DCH upgrade criteria are met until said user equipment (50) transitions to a Cell_DCH state.

**2.** A method according to any preceding claim, comprising acquiring (110;210) a common channel on which to make a common control channel transmission; and retaining (122;132) said common channel after making said common control channel transmission if said predetermined Cell_DCH upgrade criteria are met until said user equipment (50) transitions to a Cell_DCH state.

**3.** A method according to any preceding claim, comprising acquiring (110:210) a common control channel on which to make a dedicated control channel transmission; and retaining (122:232) said common channel after making said dedicated control channel transmission if said predetermined Cell_DCH upgrade criteria are met until said user equipment (50) transitions to a Cell_DCH state.

**4.** A method according to any preceding claim, comprising acquiring (110;220) a common E-DCH; and retaining (122;132) said common E-DCH if said predetermined Cell_DCH upgrade criteria are met until said user equipment (50) transitions to a Cell_DCH state.

**5.** A method according to any preceding claim, wherein said step of retaining (122;132) comprises:
determining (230) whether a predetermined common channel retention timer has expired and, if so, releasing (234) said acquired common channel.

**6.** A method according to claim 5, wherein said predetermined common channel retention timer is initiated on acquiring said common channel.

**7.** A method according to any preceding claim, comprising:
determining (310) whether common channel usage in said wireless telecommunications network (10) meets predetermined usage criteria and, if said criteria are met, disabling (320) said retaining of said common channel.

**8.** A method according to claim 7, wherein said determining (310) comprises:
assessing whether a time period which elapsed between requesting and being allocated a common channel meets predetermined criteria indicative of common channel restrictions in a cell.

**9.** A method according to claim 7, wherein said determining (310) comprises receiving an indication of common channel restrictions originating from a control node (40) in said network (10).

**10.** A method according to claim 7, wherein said determining (310) comprises receiving an indication of common channel restrictions originating from a base station (20) in said network (10).

**11.** A method according to claim 9 or claim 10, wherein said indication comprises reception of a HS-SCCH order.

**12.** A method according to claim 9 or claim 10, wherein said determining comprises reception of a change in a System Information Broadcast message.

**13.** A computer program product operable, when executed on a computer, to perform the method of any one of claims 1 to 12.

**14.** User equipment (50) operable to control release of an acquired common channel in a wireless telecommunications network (10), said user equipment (50) comprising:
acquisition logic operable to acquire a common channel;
data traffic assessment logic operable to assess whether data traffic to be sent between said user equipment (50) and said network (10) meets predetermined Cell_DCH upgrade criteria by assessing (120;220) whether data traffic to be sent between said user equipment (50) and said network (10) comprises assessing the nature of data traffic to be sent from said user equipment (50) to said network (10) and
determining whether the nature of that data traffic meets said predetermined Cell_DCH upgrade criteria; and
common channel retention logic operable to retrain said common channel if said predetermined Cell_DCH upgrade criteria are met until said user equipment (50) transitions to a Cell_DCH state.
